# EUROPEAN PATENT APPLICATION

(11) **EP 4 789 591 A1**
(43) Date of publication of application: **12.08.2026**
(21) Application number: 24864257.1
(22) Date of filing: 15.07.2024
(51) Int. Cl.: A47J 37/06, A47J 37/07

(54) **OPENING/CLOSING MECHANISM AND BARBECUE GRILL**

(30) Priority: 12.09.2023 CN 202322473786 U; 22.12.2023 CN 202323535325 U; 11.06.2024 CN 202421325055 U
(71) Applicant: Haohong Electric Technology (Hubei) Co., Ltd., Huanggang, Hubei 438000 (CN)
(72) Inventor: WANG, Min, Huanggang, Hubei 438000 (CN)
(74) Representative: Osterhoff, Utz
(86) International application number: PCT/CN2024/105499
(87) International publication number: WO 2025/055533

(57) **Abstract**

Disclosed are an opening/closing mechanism and a barbecue grill. The opening/closing mechanism includes an opening/closing housing (20) and a spring suspension assembly. The opening/closing housing (20) includes an upper housing (21) and a lower housing (22). The upper housing (21) is rotatably connected to the lower housing (22). The upper housing (21) and the lower housing (22) enclose to form a cavity (20A). The upper housing (21) is connected to the grill cover (999), and the lower housing (22) is connected to the grill body (888). The spring suspension assembly includes a fixed shaft (23), a movable shaft (24), a compression spring (25), a damping member (26), and a central rod (27). The two ends of the fixed shaft (23) and the movable shaft (24) are respectively located on both sides of the overlapping part formed by the upper housing (21) and the lower housing (22), and the movable shaft (24) can move about the fixed shaft (23) in the cavity (20A). The central rod (27) is located in the cavity (20A) of the lower housing (22) and connected to the movable shaft (24). The compression spring (25) is sleeved on the central rod (27), and the damping member (26) is sleeved on the end of the central rod (27) away from the movable shaft (24).

## Description

This application claims priority to Chinese Patent Application No. 202322473786.6, filed on September 12, 2023, Chinese Patent Application No. 202323535325.3, filed on December 22, 2023, and Chinese Patent Application No. 202421325055.5, filed on June 11, 2024, the entire contents of which are incorporated herein by reference.

### TECHNICAL FIELD

The present application relates to the technical field of grill accessories, and in particular to an opening/closing mechanism and a barbecue grill.

### BACKGROUND

With the growing popularity of barbecue (BBQ), barbecue grills are increasingly used outdoors instead of indoors. Therefore, it is essential to enable an upper grill body and a lower grill body of a barbecue grill to open and close, and such opening and closing function is realized by a spring hinge structure.

In the related art, when a grill cover of a barbecue grill needs to be opened, the spring hinge structure can only fully open the grill cover. Without support or restriction from external objects, the grill cover can merely stay in a fully open state. The operator cannot open the grill cover to a desired angle by means of the spring hinge structure. When the grill cover is fully opened, a large amount of airflow rushes into the grill body, lowering the internal temperature of the grill body and adversely affecting the subsequent cooking of food.

### SUMMARY

The main purpose of the present application is to provide an opening/closing mechanism, aiming to realize multi-angle suspension of a grill cover when the grill cover is opened via a spring suspension assembly.

In order to achieve the above purpose, the present application provides an opening/closing mechanism, including:
an opening-closing housing including an upper housing and a lower housing, where the upper housing is rotatably connected to the lower housing, the upper housing and the lower housing enclose to form a cavity; the upper housing is connected to the grill cover, and the lower housing is connected to the grill body; and
a spring suspension assembly including a fixed shaft, a movable shaft, a compression spring, a damping member and a central rod, where two end portions of the fixed shaft and the movable shaft are respectively provided at two sides of an overlapping portion formed by the upper housing and the lower housing, the movable shaft is capable of rotating about the fixed shaft inside the cavity; the central rod is limited in the cavity of the lower housing and connected to the movable shaft; the compression spring is sleeved on the central rod, and the damping member is sleeved on an end of the central rod distal to the movable shaft;
the opening/closing mechanism has a suspension state; in the suspension state, the compression spring applies a force to the damping member, so that an inner surface of the damping member abuts against an outer surface of the central rod.

In an embodiment of the present application, the spring suspension assembly further includes a spring adjusting nut, and the spring adjusting nut is provided at an end of the central rod adjacent to the movable shaft.

In an embodiment of the present application, an outer diameter of a middle portion of the compression spring is larger than outer diameters of two ends of the compression spring.

In an embodiment of the present application, the spring suspension assembly further includes a damping limiting assembly, and the damping limiting assembly is provided in the cavity; and the damping limiting assembly is sleeved on the damping member, so that the damping member is capable of abutting against the central rod in the suspension state.

In an embodiment of the present application, the opening/closing mechanism further includes a connecting clamp, the connecting clamp includes a first clamp and a second clamp; the first clamp is detachably connected to the upper housing and capable of connecting to the grill cover, and the second clamp is detachably connected to the lower housing and capable of connecting to the grill body.

In an embodiment of the present application, both the first clamp and the second clamp include a surrounding segment and adjusting segments bent at both ends of the surrounding segment, and both adjusting segments are provided with insertion holes aligned with each other; and the opening/closing mechanism further includes hoop adjusting assemblies, each hoop adjusting assembly is connected to the two adjusting segments of the connecting hoop and is capable of adjusting a spacing between the two adjusting segments.

In an embodiment of the present application, each hoop adjusting assembly includes an adjusting bolt and a nut; the adjusting bolt is limited in the two insertion holes, and the nut is provided at a side of one adjusting segment facing away from the other adjusting segment, so as to adjust the spacing between the two adjusting segments.

In an embodiment of the present application, the surrounding segment is provided with a plurality of preset holes; each preset hole is fitted with a bolt, a cap nut is provided at an outer side of each bolt, and each cap nut cooperates with each bolt to form a reserved mounting portion.

In an embodiment of the present application, both the upper housing and the lower housing are provided with one set of connecting portions, and each set of connecting portions includes two sub-connecting portions; and the two sub-connecting portions of each set are respectively provided at two opposite sides of the upper housing and the lower housing, and the sub-connecting portions are detachably connected to the first clamp and the second clamp.

The present application further provides a barbecue grill, including: a grill cover, a grill body and the opening/closing mechanism, the first clamp is detachably connected to the grill cover, and the second clamp is detachably connected to the grill body.

In an embodiment of the present application, a button locking mechanism for locking and positioning the grill cover is mounted on the other side of the grill body, and the button locking mechanism includes a locking hook, a locking member, a cylindrical spring and a push block; and the locking member is mounted on the other side surface of the grill cover and extends downwards into the grill body, and a locking hole is provided at an outer side surface of the grill body at a position opposite the locking member; a portion of the locking hook passes through the locking hole and latches onto the locking member, and the other end of the locking hook is fixedly connected to the push block; the cylindrical spring is sleeved on an exposed end of the locking hook.

In an embodiment of the present application, a side table plate is mounted on a side surface of the grill body, and a cutting board is provided at the side table plate; an end of the side table plate is provided with a positioning hole, and an end face of the cutting board is provided with a positioning groove at a position opposite to the positioning hole; a positioning column is provided in the positioning hole, one end of the positioning column is inserted into the positioning groove, and a pull ring is mounted on the other end of the positioning column; and a tension spring is sleeved on the positioning column, one end of the tension spring is mounted on the side table plate, and the other end of the tension spring is mounted on the pull ring.

In an embodiment of the present application, the side table plate is rotatably connected to the grill body, so that the side table plate is capable of being folded towards the grill body.

In an embodiment of the present application, a top surface of the grill cover is provided with a gas outlet hole, and a chimney base is mounted in the gas outlet hole; and a fixing plate is provided at an upper opening of the chimney base, and the fixing plate is configured to open or seal a smoke exhaust passage inside the chimney base.

In an embodiment of the present application, the top surface of the grill cover is provided with the gas outlet hole, and the chimney base is mounted in the gas outlet hole; the fixing plate is provided at the upper opening of the chimney base, an adjusting plate is provided at the fixing plate, and a top cover is provided above the adjusting plate; a smoke outlet passage is formed between the top cover and the adjusting plate; the fixing plate is provided with a plurality of first exhaust holes, and the adjusting plate is provided with a plurality of second exhaust holes, and the first exhaust holes is opposite to the second exhaust holes; a top surface of the adjusting plate is provided with a plurality of vertical plates in an annular arrangement, a top surface of the vertical plate abuts against a bottom surface of the top cover; and a twist lock is mounted on a side of the chimney base, one end of the twist lock is fixedly connected to the top cover, and the fixing plate and the adjusting plate are configured to open or seal the smoke exhaust passage inside the chimney base.

In an embodiment of the present application, an end face of the chimney base facing the top cover is provided with five ventilation gear indicators; each ventilation gear indicator is arranged at intervals along an outer edge of the chimney base, and one vertical baffle is aligned with any one of the ventilation gear indicators.

In an embodiment of the present application, a heat-insulating ceramic liner is provided in the grill body, the heat-insulating ceramic liner forms a baking chamber; a cross-sectional shape of the heat-insulating ceramic liner is adapted to the grill body; and/or
the grill body is further provided with a heat-insulating layer, and the heat-insulating layer is detachably attached to an inner peripheral wall of the grill body.

In an embodiment of the present application, the grill body is provided with a cooking layer, and the cooking layer sequentially includes a first cooking layer, a second cooking layer and a baking layer from top to bottom; and the first cooking layer, the second cooking layer and the baking layer are arranged at intervals, and the baking layer extends into the baking chamber.

In an embodiment of the present application, an ash removal opening is provided at a side surface of the grill body, and an end of an ash receiving tray extends into the ash extraction opening; and a vent opening is provided at a side surface of the ash receiving tray facing the ash extraction opening, the ash receiving tray and the vent opening are integrally formed, and a cover plate for covering the vent opening is slidably mounted on an outer side of the ash receiving tray.

In an embodiment of the present application, a roasting fork mounting frame is provided inside the grill body.

According to the technical solution of the present application, the opening/closing mechanism is applied to a barbecue grill, and the barbecue grill includes a grill cover and a grill body connected to the grill cover. The opening/closing mechanism includes an upper housing connected to the grill cover and a lower housing connected to the grill body. The upper housing and the lower housing enclose to form a cavity, and the cavity is used for mounting the spring suspension assembly. When the grill cover is opened, the movable shaft rotates about the fixed shaft and drives the central rod to move, so that the compression spring sleeved on an outer peripheral side of the central rod deforms and generates an acting force. Under the action of the acting force, the inner wall of the damping member abuts against the outer wall of the central rod to prevent further deformation of the compression spring. At this time, the self-weight of the grill cover is balanced with the elastic force of the compression spring, so that the grill cover can maintain a stationary state and realize position suspension at multiple angles. By adjusting the opening degree of the grill cover, the desired opening degree required by the operator can be achieved, preventing an excessively large opening angle that would cause a large amount of airflow to enter the grill body and reduce the internal temperature. This avoids negatively affecting the food being cooked and prevents compromising the taste of the food.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic structural view of an opening/closing mechanism according to an embodiment of the present application.
FIG. 2 is a schematic structural view of the opening-closing housing according to an embodiment of the present application.
FIG. 3 is a schematic structural view of a partial structure of FIG. 2.

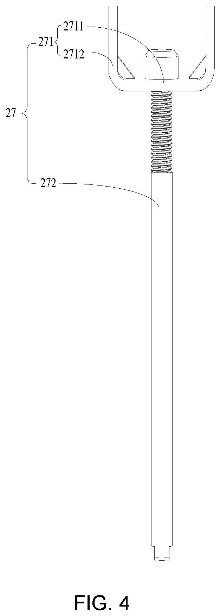

FIG. 4 is a right side view of a schematic structural view of a central rod according to an embodiment of the present application.
FIG. 5 is a right side view of FIG. 1.
FIG. 6 is a schematic partial structural view of a connecting hoop according to the present application.
FIG. 7 is an enlarged schematic view of part A in FIG. 6.
FIG. 8 is a right side view of a schematic structural view of the barbecue grill according to an embodiment of the present application.
FIG. 9 is an overall structural schematic view of the barbecue grill according to an embodiment of the present application.
FIG. 10 is a schematic structural view of the other side of the barbecue grill according to the present application.
FIG. 11 is a cross-sectional view of the barbecue grill according to the present application.
FIG. 12 is a schematic structural view of a button locking mechanism of the grill according to the present application.
FIG. 13 is a schematic structural view of a positioning structure of a side table plate of the barbecue grill according to the present application.

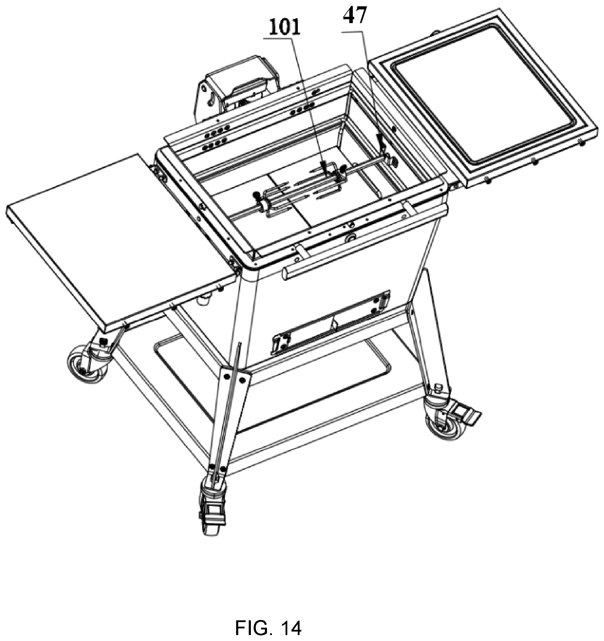

FIG. 14 is an overall internal schematic view of the barbecue grill according to the present application.
FIG. 15 is a cross-sectional view of the barbecue grill according to the present application.
FIG. 16 is a schematic structural view of a chimney base of the barbecue grill according to the present application.
FIG. 17 is a schematic structural view of a cooking layer of the barbecue grill according to the present application.

Description of the reference signs:

**[Table l_sm_0001]**

| Reference Numeral | Name | Reference Numeral | Name |
|---|---|---|---|
| 10 | connecting hoop | 21 | upper housing |
| 11 | first hoop | 22 | lower housing |
| 12 | second hoop | 201 | sub-connecting portion |
| 101 | surrounding segment | 20A | cavity |
| 102 | adjusting segment | 23 | fixed shaft |
| 103 | adjusting bolt | 24 | movable shaft |
| 104 | nut | 25 | compression spring |
| 105 | bolt | 26 | damping member |
| 106 | cap nut | 27 | central rod |
| 20 | opening/closing housing | 28 | spring adjusting nut |
| 271 | rod head | 272 | rod body |
| 2711 | first connecting segment | 2712 | second connecting segment |
| 29 | stop piece | 30 | limiting plate |
| 22A | arc groove | 999 | grill cover |
| 31 | damping limiting sleeve | 888 | grill body |
| 19 | button locking mechanism | 36 | positioning column |
| 41 | locking hook | 38 | pull ring |
| 43 | cylindrical spring | 37 | tension spring |
| 44 | push block | 3 | chimney base |
| 27 | locking member | 4 | fixing plate |
| 45 | side table plate | 5 | adjusting plate |
| 46 | cutting board | 6 | top cover |
| 14 | ash receiving tray | 7 | twist lock |
| 16 | support frame | 32 | vent opening |
| 100 | roasting fork mounting frame | 15 | cover plate |
| 47 | electric roasting fork kit | 39 | thermometer |
| 48 | ventilation gear indicator | 49 | heat-insulating ceramic inner container |
| 50 | heat-insulating layer | 51 | cooking layer |
| 52 | first cooking layer | 53 | second cooking layer |
| 54 | baking layer | | |

The achievement of the objectives, functional features, and advantages of the present application will be further explained with reference to the embodiments and accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by persons skilled in the art based on the embodiments of the present application without creative efforts shall fall within the scope of the present application.

It should be noted that if there are directional indications, such as up, down, left, right, front, back, etc., involved in the embodiments of the present application, the directional indications are only used to explain the relative position relationship and movement of the components in a specific posture. If the specific posture changes, the directional indication also changes accordingly.

In addition, if there are descriptions related to "first", "second", etc. in the embodiments of the present application, the descriptions of "first", "second", etc. are only for the purpose of description, and should not be construed as indicating or implying relative importance or implicitly indicating the number of technical features indicated. Thus, a feature delimited with "first", "second" may expressly or implicitly include at least one of these features. Besides, the meaning of "and/or" appearing in the application includes three parallel scenarios. For example, "A and/or B" includes only A, or only B, or both A and B. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of the present application.

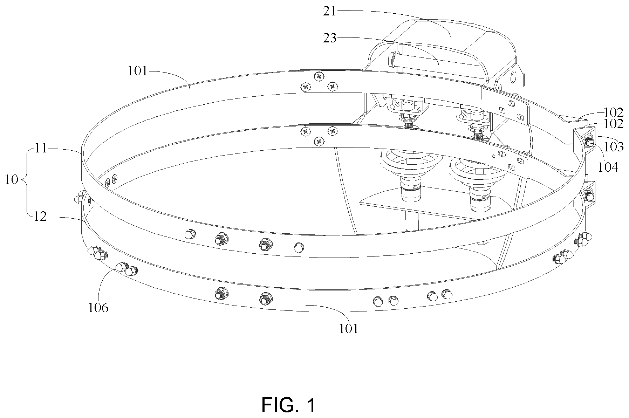

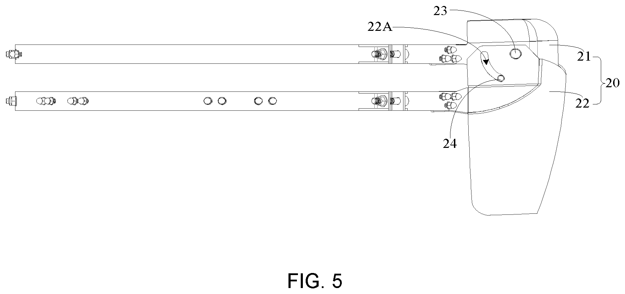

The present application provides an opening/closing mechanism, as shown in FIG. 1 and FIG. 5, and the opening/closing mechanism includes: an opening/closing housing 20 and a spring suspension assembly.

The opening/closing housing 20 includes an upper housing 21 and a lower housing 22. The upper housing 21 is rotatably connected to the lower housing 22, and the upper housing 21 and the lower housing 22 enclose to form a cavity 20A. The upper housing 21 can be connected to a grill cover 999, and the lower housing 22 can be connected to a grill body 888.

The spring suspension assembly includes a fixed shaft 23, a movable shaft 24, a compression spring 25, a damping member 26 and a central rod 27. Two end portions of the fixed shaft 23 and the movable shaft 24 are respectively provided at two sides of an overlapping portion formed by the upper housing 21 and the lower housing 22. The movable shaft 24 is capable of rotating about the fixed shaft 23 inside the cavity 20A. The central rod 27 is limited in the cavity 20A of the lower housing 22 and connected to the movable shaft 24. The compression spring 25 is sleeved on the central rod 27, and the damping member 26 is sleeved on an end of the central rod 27 distal to the movable shaft 24.

The opening/closing mechanism has a suspension state; in the suspension state, the compression spring 25 applies a force on the damping member 26, so that an inner wall of the damping member 26 abuts against an outer wall of the central rod 27.

According to the technical solution of the present application, the opening/closing mechanism is applied to a barbecue grill, and the barbecue grill includes a grill cover 999 and a grill body 888 connected to the grill cover 999. The upper housing 21 and the lower housing 22 enclose to form a cavity 20A, and the cavity 20A is used for mounting the spring suspension assembly. When the grill cover 999 is opened, the movable shaft 24 rotates about the fixed shaft 23 and drives the central rod 27 to move, so that the compression spring 25 sleeved on the outer circumference of the central rod 27 deforms and generates a force. Under the action of this force, the inner wall of the damping member 26 abuts against the outer wall of the central rod 27 and prevents further deformation of the compression spring 25. At this time, the self-weight of the grill cover 999 is balanced with the elastic action of the compression spring 25, so that the grill cover 999 can maintain a stationary state and realize position suspension at multiple angles. By adjusting the opening degree of the grill cover 999, the desired opening degree required by the operator can be achieved, preventing an excessively large opening angle that would cause a large amount of airflow to enter the grill body 888 and reduce the internal temperature. This avoids negatively affecting the food being cooked and prevents compromising the taste of the food.

In this embodiment, the opening/closing housing 20 includes the upper housing 21 and the lower housing 22. The upper housing 21 is configured with two mutually perpendicular open faces, and the lower housing 22 is also configured with two mutually perpendicular open faces, so that the cavity 20A of the upper housing 21 is in communication with the cavity 20A of the lower housing 22, and also facilitates the installation of other structures of the opening/closing mechanism. The upper housing 21 can be rotatably connected to the lower housing 22 through a structure of a fixed shaft 23 and a movable shaft 24, or by a hinge structure. The specific structure for the rotational connection between the upper housing 21 and the lower housing 22 will be elaborated below.

The spring suspension assembly includes a fixed shaft 23, a movable shaft 24, two compression springs 25, two damping members 26 and two central rods 27. When the upper housing 21 is connected to the lower housing 22, the lower structure of the upper housing 21 and the upper structure of the lower housing 22 overlap in a wrapping manner to form a double-layer overlapping portion. It can be understood that the overlapping portion is essentially a double-layer structure composed of the upper housing 21 and the lower housing 22. Further, the lower housing 22 wraps the upper housing 21, such that the outer layer of the overlapping portion is the upper structure of the lower housing 22, and the inner layer is the lower structure of the upper housing 21. A first limiting hole communicating with the cavity 20A is provided at a corner portion adjacent to the overlapping portion. Both ends of the fixed shaft 23 are respectively limited in the first limiting holes on two opposite sides of the overlapping portion. To enable the upper housing 21 to rotate together with the grill cover 999 of the barbecue grill, an arc groove 22A is provided at the outer layer of two opposite sides of the overlapping portion, and a second limiting hole communicating with the arc groove 22A and the cavity 20A is provided at the inner layer. As defined herein, the side of the arc groove 22A adjacent to the first limiting hole is the inner side, and the side distal to the first limiting hole is the outer side; the bending direction of both the inner side and the outer side is toward the first limiting hole. Both ends of the movable shaft 24 are respectively limited in the arc groove 22A and the second limiting hole on each side of the overlapping portion. When the movable shaft 24 moves along the arc groove 22A, it rotates about the fixed shaft 23 as a central axis, thereby causing the upper housing 21 to rotate and thus achieving opening and closing of the grill cover 999. Furthermore, two central rods 27 connected to the movable shaft 24 are provided inside the cavity 20A of the lower housing 22. Each central rod 27 includes a rod head 271 and a rod body 272. The rod head 271 includes a first connecting segment 2711 and two second connecting segments 2712 bent and connected to two ends of the first connecting segment 2711. Both the first connecting segment 2711 and the two second connecting segments 2712 are provided with an insertion hole. The rod body 272 is limited in the insertion hole of the first connecting segment 2711, and the central rod 27 is connected to the movable shaft 24 via the insertion hole of the second connecting segments 2712. A compression spring 25 is provided at the outer side of each rod body 272, and a damping member 26 is sleeved on an end of the compression spring 25 distal to the movable shaft 24. The compression spring 25 can apply a force to the damping member 26. When the grill cover 999 is opened, the upper housing rotates together with the grill cover 999, and the movable shaft 24 rotates inside the arc grooves 22A about the fixed shaft 23, and then drives the central rod 27 to move upward. At this time, the compressed compression spring 25 applies an action to the damping member 26. Under the action of the force, the inner wall of the damping member 26 tightly abuts against the outer wall of the rod body 272 of the central rod 27. At this time, the compression spring 25 stops deforming, for the compression spring 25 provides supporting action to the movable shaft 24. Under such supporting action, the grill cover 999 is supported at a specific position to realize suspension of the grill cover 999.

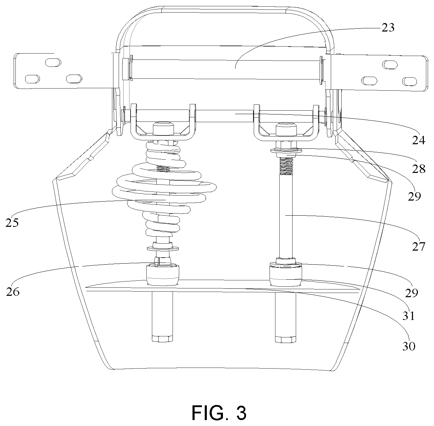

In an embodiment of the present application, as shown in FIG. 3, the spring suspension assembly further includes a spring adjusting nut 28, and the spring adjusting nut 28 is mounted at an end of the central rod 27 adjacent to the movable shaft 24.

In this embodiment, the spring suspension assembly further includes a spring adjusting nut 28. An external thread is provided at an end of the rod body 272 of the central rod 27 connected to the rod head 271, and the spring adjusting nut 28 is sleeved on the external thread of the rod body 272. Rotating the spring adjusting nut 28 can adjust the initial state of the compression spring 25. It should be noted that the initial state of the compression spring 25 in this technical solution refers to the state of the opening/closing mechanism when is applied to the grill and the grill cover 999 and grill body 888 are closed. Adjusting the spring adjusting nut 28 makes the opening/closing mechanism applied to different types of barbecue grills. Furthermore, a stop piece 29 is provided between the spring adjusting nut 28 and the compression spring 25. The stop piece 29 increases the contact area with the compression spring 25 and improves the contact stability of the compression spring 25 during assembly.

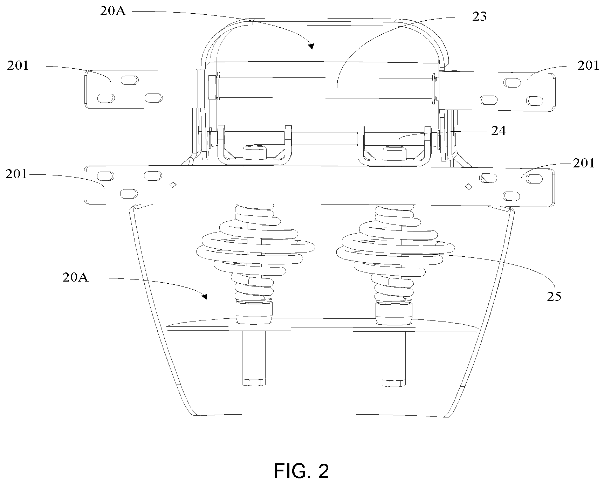

In an embodiment of the present application, as shown in FIG. 2 and FIG. 3, an outer diameter of a middle portion of the compression spring 25 is larger than outer diameters of two ends of the compression spring 25.

In this embodiment, the middle portion of the compression spring 25 has a larger outer diameter than the two ends. When subjected to external force, the compression spring 25 of this shape provides progressive elastic reaction force. Such progressive elasticity can achieve superior buffering and shock absorption effects when subjected to drastically varying loads. Furthermore, since the middle portion of the compression spring 25 has a larger outer diameter, the compression spring 25 produces a smaller deformation under the same external force. This means the compression spring 25 can generate a larger elastic action within the same working travel range, so as to realize the required elastic deformation more efficiently and provide more stable support for the grill cover 999.

In an embodiment of the present application, as shown in FIG. 3, the spring suspension assembly further includes a damping limiting assembly, and the damping limiting assembly is provided in the cavity 20A. The damping limiting assembly is sleeved on the damping member 26, so that the damping member 26 is capable of abutting against the central rod 27 in the suspension state.

In this embodiment, the spring suspension assembly further includes the damping limiting assembly, the damping limiting assembly is provided inside the cavity 20A of the lower housing 22 and is mainly used to restrict the position of the damping member 26 and prevent the damping member 26 from displacing under the action of the compression spring 25. The damping limiting assembly includes a limiting plate 30 and a damping limiting sleeve 31. The limiting plate 30 is fixed to the inner wall of the lower housing 22 by welding. A third limiting hole is provided in the limiting plate 30 at a position corresponding to the central rod 27, allowing the rod body 272 to pass through the limiting plate 30. The damping limiting sleeve 31 is sleeved on a side of the limiting plate 30 facing the compression spring 25 and limited inside the third limiting hole. The damping limiting sleeve 31 is provided with a limiting cavity, and the damping member 26 is provided in the limiting cavity. In the suspension state, the damping member 26 is stably abutted against the outer wall of the rod body 272 of the central rod 27 under the action of the compression spring 25 without displacement. A stop piece 29 is also provided at a side of the damping limiting sleeve 31 facing the compression spring 25, and the stop piece 29 has the same function as the above stop piece 29 and will not be repeated here.

In an embodiment of the present application, as shown in FIG. 1, the opening/closing housing 20 further includes a connecting hoop 10. The connecting hoop 10 includes a first hoop 11 and a second hoop 12. The first hoop 11 is detachably connected to the upper housing 21 and capable of connecting to the grill cover 999. The second hoop 12 is detachably connected to the lower housing 22 and capable of connecting to the grill body 888.

In this embodiment, the opening/closing housing 20 further includes the connecting hoop 10, and the connecting hoop 10 includes the first hoop 11 and the second hoop 12. Each hoop forms a ring structure. The first hoop 11 is sleeved on the grill cover 999, and the second hoop 12 is sleeved on the grill body 888. It can be understood that the first hoop 11 and the second hoop 12 are configured differently on account of their different connecting targets. Certainly, the hoop can also be made into a square or other shapes according to the shape of the matched grill, which is not limited herein. When the opening/closing mechanism is applied to a barbecue grill, the first hoop 11 is fixedly sleeved on the grill cover 999, and the second hoop 12 is fixedly sleeved on the grill body 888. If any component of the opening/closing mechanism is damaged and cannot be stably connected to the barbecue grill, users can remove the connecting hoop 10 and replace the opening/closing mechanism in a timely manner for continuous use of the barbecue grill.

In an embodiment of the present application, as shown in FIG. 1, both the first hoop 11 and the second hoop 12 include a surrounding segment 101 and adjusting segments 102 bent at both ends of the surrounding segment 101, and both adjusting segments 102 are provided with insertion holes aligned with each other. The opening/closing mechanism further includes hoop adjusting assemblies, each hoop adjusting assembly is connected to the two adjusting segments 102 of the connecting hoop 10 and is capable of adjusting the spacing between the two adjusting segments 102.

In this embodiment, both the first hoop 11 and the second hoop 12 include the surrounding segment 101 and the adjusting segments 102 bent at both ends of the surrounding segment 101. The surrounding segment 101 is configured to be connected to the barbecue grill, and the adjusting segments 102 at two ends of the surrounding segment 101 are configured to be connected to the two ends of the surrounding segment 101, so that the encircling section 101 forms a closed structure. Each adjusting segment 102 is provided with an insertion hole. The hoop adjusting assembly of the opening/closing mechanism is inserted into the insertion hole to adjust the spacing between the two adjusting segments 102 of the first hoop 11 and the second hoop 12, so that the opening/closing mechanism can be adapted to barbecue grills of the same shape but different models. At the same time, the hoop adjusting assembly enhances the connecting force of the connecting hoop 10 on the barbecue grill, preventing insufficient connection force from causing the connecting hoop 10 to detach from the barbecue grill. It can be understood that the hoop adjusting assembly may take the form of a straight rod with external threads at both ends and two nuts 104, or it can be a bolt 105 and nuts 104, which is not limited herein, as long as the hoop adjusting assembly can adjust the spacing between two opposite adjusting segments 102. Furthermore, reinforcing ribs are provided at the area formed by the bending connection of the adjusting segment 102 and the surrounding segment 101. The reinforcing ribs effectively prevent the adjusting segment 102 from bending and deforming, thereby extending the service life of the connecting hoop 10.

In an embodiment of the present application, as shown in FIG. 1, each hoop adjusting assembly includes an adjusting bolt 103 and a nut 104. The adjusting bolt 103 is limited in the two insertion holes, and the nut 104 is provided at a side of one adjusting segment 102 facing away from the other adjusting segment 102, so as to adjust the spacing between the two adjusting segments 102.

In this embodiment, the hoop adjusting assembly includes the adjusting bolt 103 and the nut 104. The adjusting bolt 103 passes through one insertion hole and extends through the other corresponding insertion hole. The nut 104 is provided at a side of one adjusting segment 102 facing away from the other adjusting segment 102, so that the spacing between the two corresponding adjustment segments 102 can be adjusted by rotating the nut 104. At the same time, a gasket can be added between the nut and the adjusting segment 102, which can reduce damage to the nut, prevent the nut from loosening, and strengthen the locking ability of the nut.

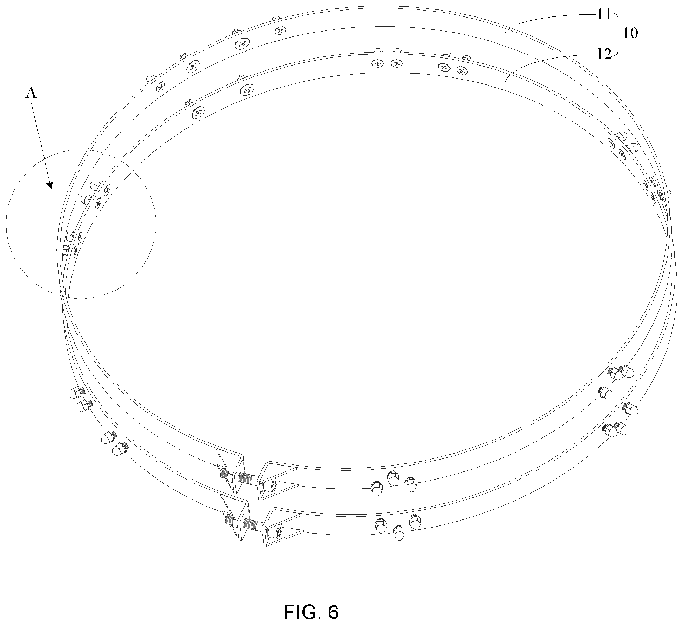

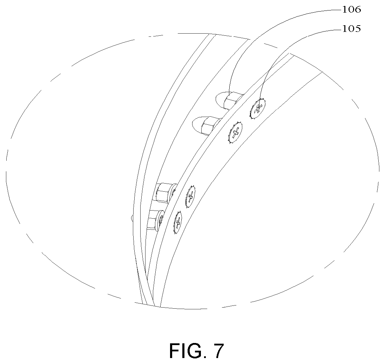

In an embodiment of the present application, as shown in FIG. 6 and FIG. 7, the surrounding segment 101 is provided with a plurality of preset holes, each preset hole is fitted with a bolt 105, and a cap nut 106 is provided at an outer side of each bolt 105. Each cap nut 106 cooperates with a corresponding bolt 105 to form a reserved mounting portion.

In this embodiment, at least one set of preset hole groups is provided at each of a plurality of sections of the surrounding segment 101, and each set of preset holes consists of a plurality of preset holes. Each preset hole is fitted with a bolt, and a cap nut 106 is provided at the outer end of each bolt 105. Threading the cap nut 106 onto the bolt 105 forms a reserved mounting portion, and the reserved mounting portion can be used to mount various functional structures matched for use with the barbecue grill, such as handles facilitating cover opening and side trays for holding food, seasonings and other food supplies. When installation is required, the assembly can be completed by unscrewing the cap nut 106, inserting the handle or food side tray onto the bolt 105, and screwing the cap nut 106 back on.

In an embodiment of the present application, as shown in FIG. 2, both the upper housing 21 and the lower housing 22 are provided with a set of connecting portions. Each set of connecting portions includes two sub-connecting portions 201. The two sub-connecting portions 201 of each set are respectively provided at two opposite sides of the upper housing 21 or the lower housing 22. The sub-connecting portions 201 are detachably connected to the first hoop 11 and the second hoop 12.

In this embodiment, each of the upper housing 21 and the lower housing 22 includes a set of connecting portions, and each set of connecting portion has two sub-connecting portions 201. Each sub-connecting portion 201 is designed in an arc shape to fit the annular hoop. It can be understood that the shape of the sub-connecting portion 201 can be adjusted according to the shape of the connecting hoop 10 to increase the contact area between the two. The two sub-connecting portions 201 of each set are respectively provided at two opposite sides of the upper housing 21 and the lower housing 22. Considering that the second hoop 12 is connected to the grill body 888 of the barbecue grill, and the grill body 888 is relatively heavy. Therefore, the two sub-connecting portions 201 of the second hoop 12 extend toward each other to form an integral structure, so as to further enlarge the contact area with the grill body 888. Furthermore, both the first hoop 11 and the second hoop 12 are provided with two through holes, so that the sub-connecting portions 201 can pass through one through hole and abut against the inner wall of the connecting hoop 10. Then, the detachable connection between the connecting hoop 10 and the opening/closing housing 20 is completed by bolts, nuts, or other locking members. The limiting function of the through holes can enhance the connection strength between the connecting hoop 10 and the opening/closing housing 20. In another embodiment, neither the first hoop 11 nor the second hoop 12 is provided with through holes. The sub-connecting portions 201 abut against the outer wall of the connecting hoop 10 and are connected via locking fasteners such as bolts and nuts. This arrangement is easier to connect and reduces installation steps compared to the former, thus improving the convenience of installation. Of course, the sub-connecting portions 201 can also be connected to the first hoop 11 and the second hoop 12 by snap-fitting, hinging or other means. When a snap-fit device is employed, two engaging assemblies of the snap-fit device are respectively fixedly provided at the inner side of the sub-connecting portions 201 and the outer surfaces of the first hoop 11 and the second hoop 12. The two engaging assemblies are engaged to achieve a detachable connection between the sub-connecting portion 201 and the first hoop 11 and the second hoop 12. In summary, the connection relationship between the sub-connecting portion 201 and the first hoop 11 and the second hoop 12 has been clearly explained, and no limitation is imposed on the specific embodiments.

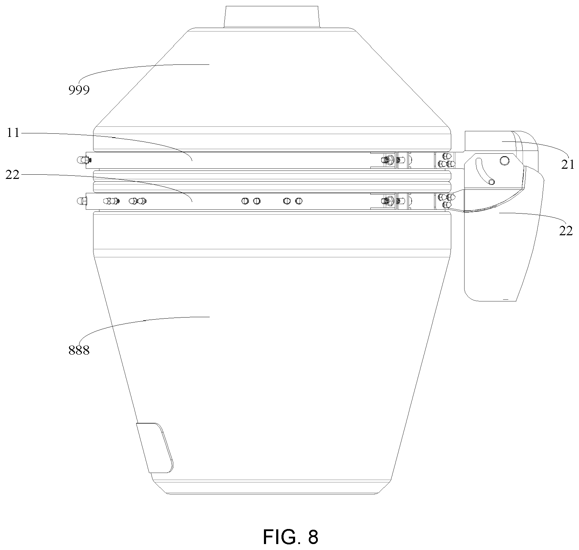

The present application further provides a barbecue grill, as shown in FIG. 8. The barbecue grill includes a grill cover 999, a grill body 888 and the opening/closing mechanism. Both the grill cover 999 and the grill body 888 are provided with an annular groove. The first hoop 11 is limited in the annular groove of the grill cover 999, and the second hoop 12 is limited in the annular groove of the grill body 888, so as to improve the connection stability of the opening/closing mechanism on the barbecue grill. Since the barbecue grill adopts all technical solutions of the foregoing embodiments of the opening/closing mechanism, it has all the beneficial effects brought by the foregoing embodiments, which will not be repeated herein.

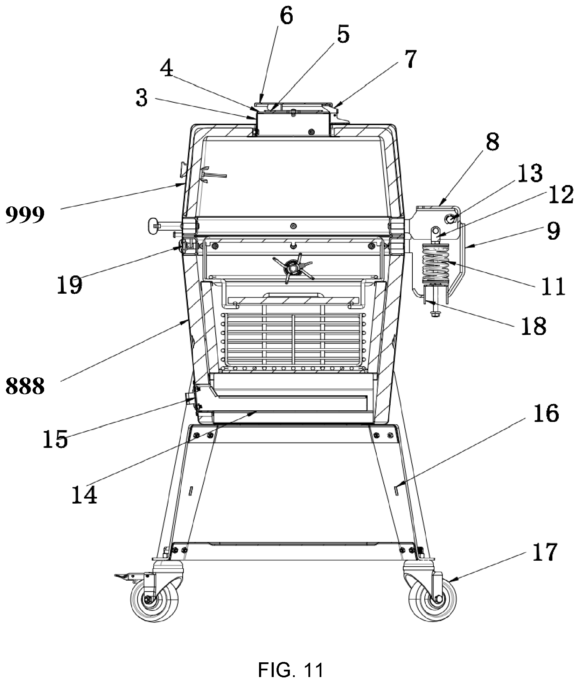

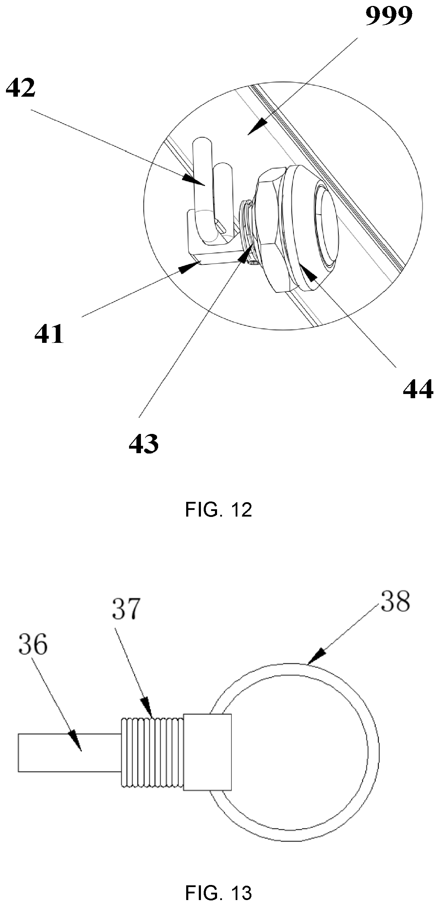

As shown in FIG. 11 and FIG. 12, a button locking mechanism 19 for locking and positioning the grill cover 999 is mounted on the other side of the grill body 888. The button locking mechanism includes a locking hook 41, a locking member 42, a cylindrical spring 43 and a push block 44. The locking member 42 is mounted on the other side face of the grill cover 999, and extends downward into the grill body 888. A locking hole is provided at the outer side surface of the grill body 888 at a position opposite the locking member 42. A portion of the locking hook 41 passes through the locking hole and latches onto the locking member 42, and the other end of the locking hook 41 is fixedly connected to the push block 44. The cylindrical spring 43 is sleeved on the exposed end of the locking hook 41. When the push block 44 is pushed inward, the push block 44 drives the locking hook 41 to move, so that the hook portion of the locking hook 41 disengages from the locking member 42, facilitating the opening of the grill cover 999.

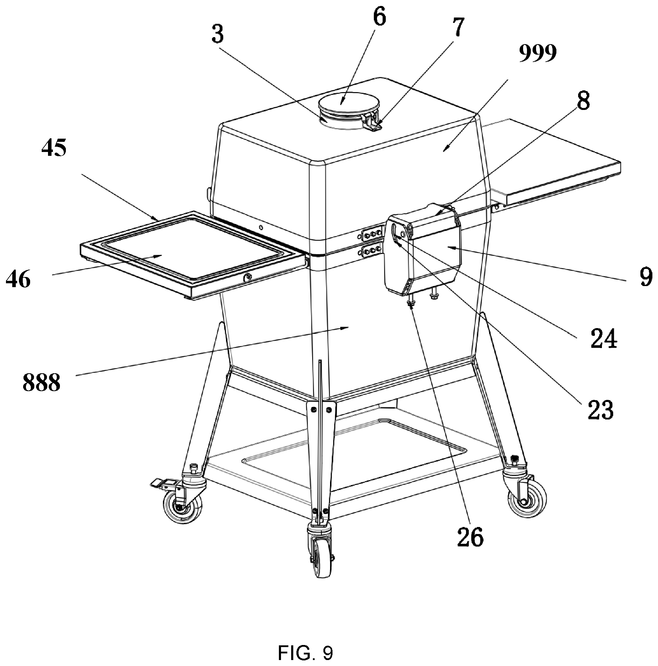

As shown in FIG. 9 and FIG. 13, a side table plate 45 is mounted on a side surface of the grill body 888, and a cutting board 46 is provided at the side table plate 45, so that vegetable cutting operations can be performed on one side of the grill body 888, increasing convenience. The side table plate 45 can be lifted upward about a hinge as the pivot to facilitate folding, reducing the transverse length of the device. An end of the side table plate 45 is provided with a positioning hole, and an end face of the cutting board 46 is provided with a positioning groove at a position opposite to the positioning hole. A positioning column 36 is provided in the positioning hole. One end of the positioning column 36 is inserted into the positioning groove, and a pull ring 38 is mounted on the other end of the positioning column 36. A tension spring 37 is sleeved on the positioning column 36. One end of the tension spring 37 is mounted on the side table plate 45, and the other end of the tension spring 37 is mounted on the pull ring 38, as shown in FIG. 13.

The side table plate 45 can also hold tools used during barbecue such as an ice bucket. The other side table plate 45 is provided with various hooks, including hooks for tableware accessories and paper towel hooks.

As shown in FIG. 11, an air outlet hole is provided at the top face of the grill cover 999, and a chimney base 3 is installed in the air outlet hole. A fixing plate 4 is provided at the upper opening of the chimney base 3, and the smoke exhaust passage inside the chimney base 3 can be opened or closed by the fixing plate 4.

In this embodiment, a top surface of the grill cover 999 is provided with a gas outlet hole and the chimney base 3 is mounted in the air outlet hole. The fixing plate 4 is provided at the upper opening of the chimney base 3, and an adjusting plate 5 is mounted on the fixing plate 4. A top cover 6 is provided above the adjusting plate 5, and a smoke exhaust passage is formed between the top cover 6 and the adjusting plate 5. The fixing plate 4 is provided with a plurality of first exhaust holes, and the adjusting plate 5 is provided with a plurality of second exhaust holes. The first smoke exhaust holes is opposite to the second smoke exhaust holes. A top surface of the adjusting plate 5 is provided with a plurality of vertical plates in an annular arrangement, and the top face of the vertical plate abuts against the bottom surface of the top cover 6. A twist lock 7 is mounted on a side of the chimney base 3, and an end of the twist lock 7 is fixedly connected to the top cover 6.

When performing smoke exhaust adjustment, the adjusting plate 5 can be directly rotated to align the first exhaust hole of the adjusting plate 5 with the second exhaust hole, or to create a slight offset therebetween, thereby adjusting the opening degree of the smoke exhaust holes. Furthermore, after lifting the top cover 6, the adjusting plate 5 and the fixing plate 4 can be removed simultaneously, allowing the chimney base 3 to be fully open, increasing the ventilation area.

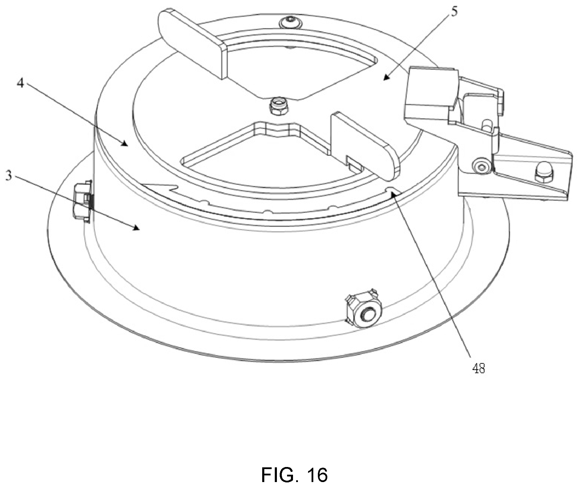

In this embodiment, as shown in FIG. 16, an end face of the chimney base 3 facing the top cover 6 is provided with five ventilation gear indicators 48. Each ventilation gear indicators 48 is arranged at intervals along the outer edge of the chimney base 3. Rotating the adjusting plate 5 enables the vertical plates to align with any one of the ventilation gear indicators 48. A vertical plate corresponds to different ventilation gear indicators 48, which indicates that the overlapping area of the first exhaust hole and the second exhaust hole varies. The five ventilation gear indicators 48 are defined at intervals, corresponding to "fully open", "third ventilation level", "second ventilation level", "first ventilation level" and "closed level". In this embodiment, when the vertical plate corresponds to the "fully open level", each first smoke exhaust hole is completely overlapped with the corresponding second smoke exhaust hole, and the ventilation area of the chimney base 3 reaches the maximum with the highest heat dissipation efficiency. Along one rotating direction of the adjusting plate 5, the vertical plate sequentially sequentially correspond to the "third ventilation level", "second ventilation level", "first ventilation level" and "closed level". The overlapping area between the first smoke exhaust holes and the second smoke exhaust holes decreases gradually. When it reaches the "closed level", the adjusting plate 5 completely covers the first smoke exhaust holes of the fixing plate 4, and the fixing plate 4 completely blocks the second smoke exhaust holes of the adjusting plate 5. By providing five ventilation gear indicators 48, the chimney base 3 has five adjustable smoke exhaust areas, which can effectively regulate the internal temperature of the ceramic grill and make the baking effect better.

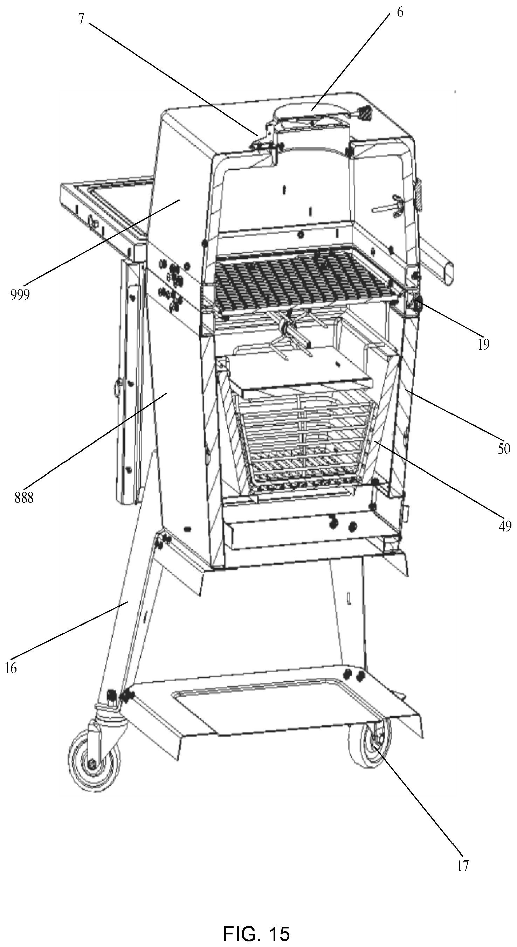

In this embodiment, as shown in FIG. 15, a heat-insulating ceramic inner container 49 is provided in the grill body 888. The heat-insulating ceramic inner container 49 forms a cooking chamber. The cross-sectional shape of the heat-insulating ceramic inner container 49 is adapted to the grill body 888. The heat-insulating ceramic inner container 49 is an integrated modular structure, which facilitates installation and subsequent maintenance. Furthermore, the grill body 888 is further provided with a heat-insulating layer 50. The heat-insulating layer 50 can be made of flexible materials such as heat-insulating cotton and rubber plastic foam, and is detachably attached to the inner peripheral wall of the grill body 888 to prevent the internal temperature of the ceramic grill from losing too quickly, thereby affecting the food preparation.

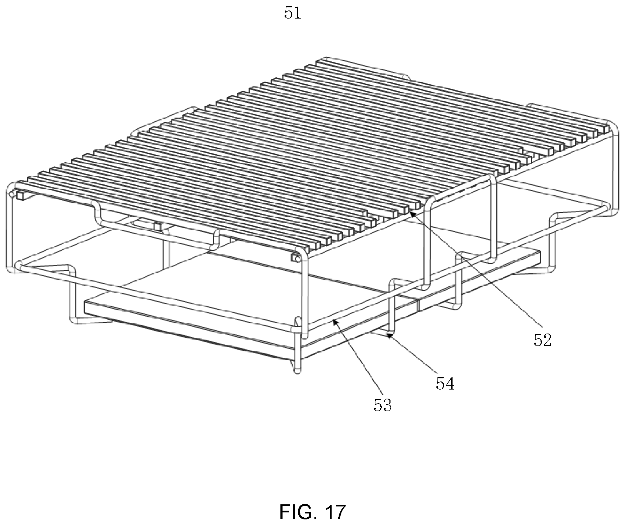

In this embodiment, as shown in FIG. 17, the grill body 888 is provided with a cooking layer 51. The cooking layer 51 sequentially includes a first cooking layer 52, a second cooking layer 53 and a baking layer 54 from top to bottom. The first cooking layer 52, the first cooking layer 82 and the baking layer 54 are arranged at intervals, and the baking layer 54 extends into the cooking chamber. The first cooking layer 52 is distal to the heat source, the first cooking layer 82 is adjacent to the heat source relative to the first cooking layer 52, and the baking layer 54 is located inside the cooking chamber. Therefore, cooked food can be placed on the first cooking layer 52 for heat preservation, uncooked food can be placed on the first cooking layer 82, and the baking layer 54 is suitable for making food such as pizza. This structure fully utilizes the internal space of the grill body, improves cooking efficiency, and makes full use of the temperature difference of different layers to place different types of food, which further enhances the practicability of the ceramic grill and improves the taste of cooked food.

As shown in FIG. 11, in this embodiment, an ash extraction opening is provided at a side surface of the grill body 888. An end of an ash receiving tray 14 extends into the ash extraction opening. A vent opening 32 is provided at a side surface of the ash receiving tray 14 facing the ash extraction opening, and the ash receiving tray 14 and the vent opening 32 are integrally formed. A cover plate 15 for covering the vent opening 32 is slidably mounted on the outer side of the ash receiving tray 14. A sliding groove for the cover plate 6 to slide is provided at the outer side of the ash receiving tray 14, and the lower end of the cover plate 6 is slidably mounted in the sliding groove. After the cover plate 6 slides to one side, the vent opening 32 can be opened, allowing outside air to enter smoothly. Since the ash collection tray 14 and the vent are integrated, the ash collection tray 14 can be pulled out directly without any other operation, greatly increasing convenience.

A support frame 16 is mounted on the bottom surface of the grill body 888, and a plurality of universal wheels for moving the device are mounted on the bottom surface of the support frame 16.

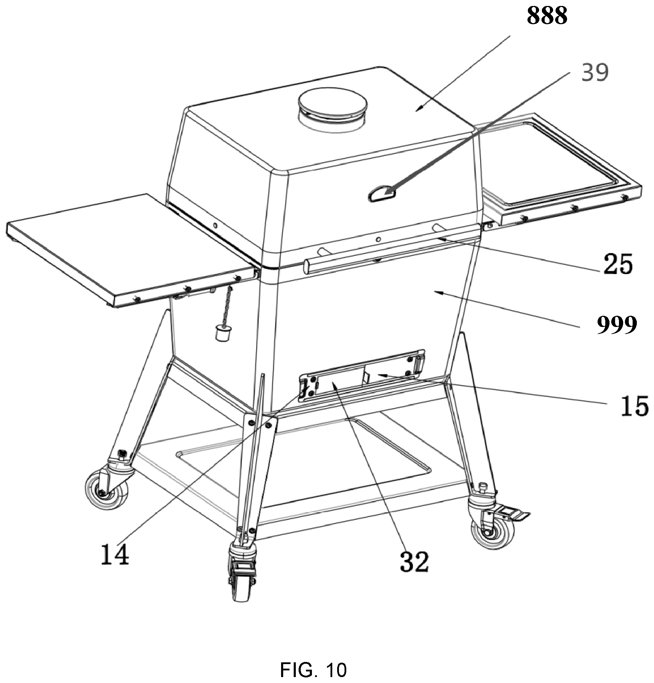

As shown in FIG. 10, in this embodiment, a thermometer 39 is mounted on the grill cover 999. The thermometer 39 can display the temperature inside the grill body 888 in real time. A roasting fork mounting frame 100 is provided inside the grill body 888. The roasting fork mounting rack 100 can be installed according to the user's needs. After installing the electric roasting fork kit 47, the user can rotate and roast food to achieve other cooking modes. When not in use, the rack can be removed and the grill body 888 can be sealed with a plug.

The above descriptions are only embodiments of the present application, and are not intended to limit the scope of the present application. Under the inventive concept of the present application, any equivalent structural transformations made by using the contents of the description and drawings of the present application, or direct/indirect applications in other related technical fields are included in the scope of the present application.

## Claims

1. An opening/closing mechanism, applied to a barbecue grill, the barbecue grill comprising a grill cover and a grill body, the grill cover being connected to the grill body, **characterized in that** the opening/closing mechanism comprises:
an opening-closing housing (20) comprising an upper housing (21) and a lower housing (22), wherein the upper housing (21) is rotatably connected to the lower housing (22), the upper housing (21) and the lower housing (22) enclose to form a cavity (20A); the upper housing (21) is connected to the grill cover, and the lower housing (22) is connected to the grill body; and
a spring suspension assembly comprising a fixed shaft (23), a movable shaft (24), a compression spring (25), a damping member (26) and a central rod (27), wherein two end portions of the fixed shaft (23) and the movable shaft (24) are respectively provided at two sides of an overlapping portion formed by the upper housing (21) and the lower housing (22), the movable shaft (24) is capable of rotating about the fixed shaft (23) inside the cavity (20A); the central rod (27) is limited in the cavity (20A) of the lower housing (22) and connected to the movable shaft (24); the compression spring (25) is sleeved on the central rod (27), and the damping member (26) is sleeved on an end of the central rod (27) distal to the movable shaft (24);
wherein the opening/closing mechanism has a suspension state; in the suspension state, the compression spring (25) applies a force to the damping member (26), so that an inner surface of the damping member (26) abuts against an outer surface of the central rod (27).

2. The opening/closing mechanism according to claim 1, wherein the spring suspension assembly further comprises a spring adjusting nut (28), and the spring adjusting nut (28) is provided at an end of the central rod (27) adjacent to the movable shaft (24).

3. The opening/closing mechanism according to claim 2, wherein an outer diameter of a middle portion of the compression spring (25) is larger than outer diameters of two ends of the compression spring (25).

4. The opening/closing mechanism according to claim 1, wherein the spring suspension assembly further comprises a damping limiting assembly, and the damping limiting assembly is provided in the cavity (20A); and
the damping limiting assembly is sleeved on the damping member (26), so that the damping member (26) is capable of abutting against the central rod (27) in the suspension state.

5. The opening/closing mechanism according to claim 1, further comprising:
a connecting clamp (10) comprising a first clamp (11) and a second clamp (12);
wherein the first clamp (11) is detachably connected to the upper housing (21) and capable of connecting to the grill cover (999), and the second clamp (12) is detachably connected to the lower housing (22) and capable of connecting to the grill body (888).

6. The opening/closing mechanism according to claim 5, wherein both the first clamp (11) and the second clamp (12) comprise a surrounding segment (101) and adjusting segments (102) bent at both ends of the surrounding segment (101), and both adjusting segments (102) are provided with insertion holes aligned with each other; and
the opening/closing mechanism further comprises hoop adjusting assemblies, each hoop adjusting assembly is connected to the two adjusting segments (102) of the connecting hoop (10) and is capable of adjusting a spacing between the two adjusting segments (102).

7. The opening/closing mechanism according to claim 6, wherein each hoop adjusting assembly comprises an adjusting bolt (103) and a nut (104); the adjusting bolt (103) is limited in the two insertion holes, and the nut (104) is provided at a side of one adjusting segment (102) facing away from the other adjusting segment (102), so as to adjust the spacing between the two adjusting segments (102).

8. The opening/closing mechanism according to claim 7, wherein the surrounding segment (101) is provided with a plurality of preset holes; each preset hole is fitted with a bolt (105), a cap nut (106) is provided at an outer side of each bolt (105), and each cap nut (106) cooperates with each bolt (105) to form a reserved mounting portion.

9. The opening/closing mechanism according to any one of claims 5 to 8, wherein both the upper housing (21) and the lower housing (22) are provided with one set of connecting portions, and each set of connecting portions comprises two sub-connecting portions (201); and
the two sub-connecting portions (201) of each set are respectively provided at two opposite sides of the upper housing (21) and the lower housing (22), and the sub-connecting portions (201) are detachably connected to the first clamp (11) and the second clamp (12).

10. A barbecue grill, comprising:
a grill cover (999);
a grill body (888); and
the opening/closing mechanism according to any one of claims 1 to 9,
wherein the first clamp (11) is detachably connected to the grill cover (999), and the second clamp (12) is detachably connected to the grill body (888).

11. The barbecue grill according to claim 10, wherein a button locking mechanism (19) for locking and positioning the grill cover (999) is mounted on the other side of the grill body (888), and the button locking mechanism (19) comprises a locking hook (41), a locking member (42), a cylindrical spring (43) and a push block (44); and
the locking member (42) is mounted on the other side surface of the grill cover (999) and extends downwards into the grill body (888), and a locking hole is provided at an outer side surface of the grill body (888) at a position opposite the locking member (42); a portion of the locking hook (41) passes through the locking hole and latches onto the locking member (42), and the other end of the locking hook (41) is fixedly connected to the push block (44); the cylindrical spring (43) is sleeved on an exposed end of the locking hook (41).

12. The barbecue grill according to claim 10, wherein a side table plate (45) is mounted on a side surface of the grill body (888), and a cutting board (46) is provided at the side table plate (45);
an end of the side table plate (45) is provided with a positioning hole, and an end face of the cutting board (46) is provided with a positioning groove at a position opposite to the positioning hole;
a positioning column (36) is provided in the positioning hole, one end of the positioning column (36) is inserted into the positioning groove, and a pull ring (38) is mounted on the other end of the positioning column (36); and
a tension spring (37) is sleeved on the positioning column (36), one end of the tension spring (37) is mounted on the side table plate (45), and the other end of the tension spring (37) is mounted on the pull ring (38).

13. The barbecue grill according to claim 12, wherein the side table plate (45) is rotatably connected to the grill body (888), so that the side table plate (45) is capable of being folded towards the grill body (888).

14. The barbecue grill according to claim 10, wherein a top surface of the grill cover (999) is provided with a gas outlet hole, and a chimney base (3) is mounted in the gas outlet hole; and
a fixing plate (4) is provided at an upper opening of the chimney base (3), and the fixing plate (4) is configured to open or seal a smoke exhaust passage inside the chimney base (3).

15. The barbecue grill according to claim 14, wherein the top surface of the grill cover (999) is provided with the gas outlet hole, and the chimney base (3) is mounted in the gas outlet hole;
the fixing plate (4) is provided at the upper opening of the chimney base (3), an adjusting plate (5) is provided at the fixing plate (4), and a top cover (6) is provided above the adjusting plate (5);
a smoke outlet passage is formed between the top cover (6) and the adjusting plate (5); the fixing plate (4) is provided with a plurality of first exhaust holes, and the adjusting plate (5) is provided with a plurality of second exhaust holes, and the first exhaust holes is opposite to the second exhaust holes;
a top surface of the adjusting plate (5) is provided with a plurality of vertical plates in an annular arrangement, a top surface of the vertical plate abuts against a bottom surface of the top cover (6); and
a twist lock (7) is mounted on a side of the chimney base (3), one end of the twist lock (7) is fixedly connected to the top cover (6), and the fixing plate (4) and the adjusting plate (5) are configured to open or seal the smoke exhaust passage inside the chimney base (3).

16. The barbecue grill according to claim 15, wherein an end face of the chimney base (3) facing the top cover (6) is provided with five ventilation gear indicators (48); each ventilation gear indicator (48) is arranged at intervals along an outer edge of the chimney base (3), and one vertical baffle is aligned with any one of the ventilation gear indicators (48).

17. The barbecue grill according to claim 14, wherein a heat-insulating ceramic liner (49) is provided in the grill body (888), the heat-insulating ceramic liner (49) forms a baking chamber; a cross-sectional shape of the heat-insulating ceramic liner (49) is adapted to the grill body (888); and/or
the grill body (888) is further provided with a heat-insulating layer (50), and the heat-insulating layer (50) is detachably attached to an inner peripheral wall of the grill body (888).

18. The barbecue grill according to claim 17, wherein the grill body (888) is provided with a cooking layer (51), and the cooking layer (51) sequentially comprises a first cooking layer (52), a second cooking layer (53) and a baking layer (54) from top to bottom; and
the first cooking layer (52), the second cooking layer (53) and the baking layer (54) are arranged at intervals, and the baking layer (54) extends into the baking chamber.

19. The barbecue grill according to claim 10, wherein an ash removal opening is provided at a side surface of the grill body (888), and an end of an ash receiving tray (14) extends into the ash extraction opening; and
a vent opening (32) is provided at a side surface of the ash receiving tray (14) facing the ash extraction opening, the ash receiving tray (14) and the vent opening (32) are integrally formed, and a cover plate (15) for covering the vent opening (32) is slidably mounted on an outer side of the ash receiving tray (14).

20. The barbecue grill according to claim 10, wherein a roasting fork mounting frame (100) is provided inside the grill body (888).
